# EUROPÄISCHE PATENTSCHRIFT

(11) **EP 2 179 171 B1**
(45) Veröffentlichungstag und Bekanntmachung des Hinweises auf die Patenterteilung: **09.02.2011**
(21) Anmeldenummer: 08862969.6
(22) Anmeldetag: 03.12.2008
(51) Int. Cl.: F03B 13/10, F03B 13/26, F03B 17/06

(54) **TAUCHENDE ENERGIEERZEUGUNGSANLAGE, ANGETRIEBEN DURCH EINE WASSERSTRÖMUNG**
SUBMERSIBLE ENERGY GENERATING SYSTEM, DRIVEN BY A WATER FLOW
INSTALLATION DE PRODUCTION D'ÉNERGIE À IMMERGER, ENTRAÎNÉE PAR UN COURANT D'EAU

(30) Priorität: 17.12.2007 DE 102007061185
(43) Veröffentlichungstag der Anmeldung: 28.04.2010
(73) Patentinhaber: Voith Patent GmbH, 89522 Heidenheim (DE)
(72) Erfinder: HOLSTEIN, Benjamin, 89520 Heidenheim (DE); PERNER, Norman, 89233 Neu-Ulm (DE)
(74) Vertreter: Dr. Weitzel & Partner
(86) Internationale Anmeldenummer: PCT/EP2008/010215
(87) Internationale Veröffentlichungsnummer: WO 2009/077080

(56) Entgegenhaltungen:
- EP-A- 1 741 926
- DE-A1-102005 040 807
- GB-A- 818 441
- GB-A- 2 225 813
- US-A- 3 209 156
- US-A1- 2007 018 459
- US-B1- 6 267 551

## Beschreibung

Die Erfindung betrifft eine tauchende Energieerzeugungsanlage, angetrieben durch eine Wasserströmung, insbesondere zur Gewinnung elektrischer Energie aus einer Fließwasser- oder Meeresströmung, vorzugsweise einer Gezeitenströmung.

Unabhängig von Dammstrukturen ausgebildete, tauchende Energieerzeugungsanlagen, die durch die kinetische Energie einer Wasserströmung, insbesondere einer Meeresströmung, angetrieben werden, stellen ein großes Potential zur Ausnutzung regenerativer Energiequellen dar. Hierbei lässt sich aufgrund der hohen Dichte des Strömungsmediums bereits eine geringe Strömungsgeschwindigkeit von etwa 2 bis 2,5 m/s zur wirtschaftlichen Energiegewinnung ausnutzen. Solche Strömungsverhältnisse können entweder als Gezeitenströmung vorliegen oder es werden andere Meeresströmungen ausgenutzt, welche insbesondere an Meerengen wirtschaftlich verwertbare Geschwindigkeiten erreichen können.

Derartige Strömungen können Strömungskraftwerke antreiben, welche eine ähnliche Gestaltung wie Windenergieanlagen aufweisen, das heißt als Wasserturbinen werden Laufräder mit Rotorblättern verwendet. Allerdings sind auch andere Wasserturbinenkonzepte, etwa Vertikalturbinen und Rohrturbinen, denkbar. Ferner können solche gattungsgemäß freistehenden, tauchenden Energieerzeugungsanlagen auch in Fließgewässern Verwendung finden, in denen aufgrund von Vorgaben durch den Umweltschutz oder die Verkehrsschifffahrt keine Staustufen mit darin eingelagerten Wasserturbinen errichtet werden können.

Eine grundlegende Schwierigkeit beim Betrieb freistehender, tauchender Energieerzeugungsanlagen besteht darin, dass deren Wartung aufwendig ist. Zur Ausführung einer Servicemaßnahme muss die Wasserturbine und der elektrische Generator über den Wasserspiegel angehoben werden. Aufgrund der Abhängigkeit von den Wetterbedingungen und dem Wellengang sind schwimmende Kransysteme für diese Aufgabe nachteilig, so dass die tauchenden Energieerzeugungsanlagen vielfach als schwimmfähige Einheiten ausgebildet werden, welche eine Verankerung am Gewässergrund aufweisen. Derart schwimmfähige Einheiten können so gestaltet sein, dass für den Servicefall ein Auftreiben an die Wasseroberfläche möglich ist. Gemäß einer alternativen Gestaltung umfasst die tauchende Energieerzeugungsanlage eine Trag- und Stützstruktur, insbesondere eine säulenförmige Anordnung, die auf dem Meeresgrund steht und an der typischerweise eine Baueinheit aus elektrischem Generator und Wasserturbine befestigt ist. Wird diese Trag- und Stützstruktur bis zum Wasserspiegel fortgesetzt, so ist es möglich, die Energieerzeugungsanlage für den Wartungsfall vertikal an dieser Struktur zu verfahren. Hierzu kann den Stütz- und Tragstrukturen ein Hebemechanismus zugeordnet werden. Neben der konstruktiven aufwendigen Gestaltung ist für eine solche Konstruktion nachteilig, dass die über dem Wasserspiegel und knapp darunter angeordneten Strukturen für die Schifffahrt gefährliche Hindernisse darstellen können.

Die voranstehend genannte Wartungsproblematik führt zu der Anforderung, tauchende Energieerzeugungsanlagen möglichst wartungsfrei zu konstruieren. Demnach wäre es wünschenswert, die Anzahl der im Triebstrang zum Antrieb eines elektrischen Generators verwendeten Komponenten zu reduzieren. Allerdings führen die typischerweise langsamen Strömungsgeschwindigkeiten im Ozean zu geringen Umlaufgeschwindigkeiten von Wasserturbinen, wobei aufgrund der hohen Dichte des antreibenden Mediums ein hohes Moment aufgenommen wird. Für den effizienten Betrieb eines elektrischen Generators sind viel höhere Umlaufdrehzahlen notwendig, so dass typischerweise zwischen der Wasserturbine und dem angetriebenen elektrischen Generator ein Getriebe zur Drehzahlerhöhung zwischengeschaltet ist. Hierzu wird exemplarisch auf die US 2006 055 174 A verwiesen.

Die Verwendung eines Zwischengetriebes ist allerdings, wie voranstehend dargelegt, im Hinblick auf die Ausfallsicherheit nachteilig. Darüber hinaus verlangt ein Getriebe einen hohen konstruktiven Aufwand sowie die Verwendung von Schmiermitteln, was für den vorliegenden Anwendungsfall aus Umweltgesichtspunkten nachteilig ist. Entsprechend ist meist für die antreibende Welle vor der Wellenlagerung eine Wellendichtung am Gondelgehäuse vorgesehen. Eine derartige Wellendichtung ist nicht gänzlich wartungsfrei und kann vielfach den Eintritt von Umgebungswasser in das Innere der Energieerzeugungsanlage nicht vollständig unterbinden, so dass im Gondelgehäuse Lenzpumpen in Verbindung mit Ölabscheidern vorgesehen sein müssen.

Eine getriebelose, tauchende Energieerzeugungsanlage mit einem direkt angetriebenen elektrischen Generator kann der WO 07017629 A1 entnommen werden. Hieraus geht die Verwendung eines gegenläufig rotierenden Rotorpaars zur Aufnahme kinetischer Energie aus der Umgebungsströmung hervor, wobei ein erster Rotor drehstarr mit dem Generatorstator und ein zweiter Rotor drehstarr mit dem Generatorläufer verbunden sind. Allerdings besteht auch für die in der WO 07017629 A1 vorgeschlagene Lösung die Problematik, das Innere der Energieerzeugungsanlage mittels einer Wellendichtung abzudichten.

Ein alternativer Weg wird durch die EP 1 741 926 A2, die als nächstliegender Stand der Technik augesehen wird, vorgeschlagen. Offenbart wird die Verwendung eines Generators umfassend einen Generatorläufer in Form eines Nabenrings, in dem eine Vielzahl von Permanentmagneten aufgenommen ist. Der Generatorläufer ist als Außenläufer ausgebildet und stützt sich zu beiden Seiten des Luftspalts mittels hydrostatischer Lager gegen ein Gondelgehäuse ab. Die Lagerung ist als kombiniertes Radial- und Axiallager in V-Form angelegt.

Der Nabenring trägt zusätzlich zu den Komponenten des Generatorläufers die nach radial außen weisenden propellerförmigen Turbinenblätter der Energieerzeugungsanlage. Die in der EP 1 741 926 A2 vorgeschlagene Lösung führt aufgrund des radial großbauenden Generators zu hinreichend großen Umlaufgeschwindigkeiten des Generators. Nachteilig an diesem Konzept ist allerdings der Aufwand, der zur Ausbildung einer verwindungssteifen Struktur des Nabenrings des Außenläufers notwendig ist. Hierzu ist zu beachten, dass die an den Anlenkpunkten der Turbinenblätter am Nabenring eingeleiteten Kräfte nicht zu solchen Verwindungen führen dürfen, dass die Spaltabstände im Luftspalt zu stark variieren. Zusätzlich besteht die Notwendigkeit, die Lagerschale des hydrostatischen Lagers, angrenzend an den Nabenring hinreichend verwindungssteif auszubilden. In der praktischen Umsetzung wird daher ein Nabenring notwendig sein, der insbesondere bezüglich seiner Radialerstreckung großbauend ausgeführt ist und damit die Strömung verblockt. Demnach ist die mögliche Längenerstreckung der Turbinenblätter ausgehend von einem fix vorgegebenen Gesamtdurchmesser der Energieerzeugungsanlage reduziert. Alternativ kann der Durchmesser des Generators verringert werden, was jedoch im Hinblick auf die Umlaufgeschwindigkeiten des elektrischen Generators nachteilig ist.

Der Erfindung liegt die Aufgabe zugrunde, eine gattungsgemäße Energieerzeugungsanlage anzugeben, die sich durch lange Serviceintervalle, eine geringe Komponentenanzahl sowie durch eine konstruktiv einfache Gestaltung auszeichnet.

Die Aufgabe wird durch die Merkmale des unabhängigen Anspruchs gelöst. Vorteilhafte Ausgestaltungen ergeben sich aus den Unteransprüchen.

Zur Lösung der Aufgabe gehen die Erfinder von einem elektrischen Generator aus, der direkt angetrieben wird. Bevorzugt wird ein hochpoliger Generator, insbesondere ein hochpoliger Synchrongenerator in Form eines Ringgenerators. Aufgrund des Direktantriebs besteht eine drehstarre Verbindung zwischen einer Wasserturbine, die vorzugsweise eine propellerförmige Struktur aufweist, und dem Generatorläufer. Der Generatorstator wird innerhalb des nicht umlaufenden Teils der Energieerzeugungsanlage und damit innerhalb des Gondelgehäuses angeordnet.

Der Generatorläufer ist als Innenläufer ausgebildet und wird von einem Stützelement getragen, das wenigstens mittelbar mit der Wasserturbine umläuft und demnach ein Teil der umlaufenden Einheit darstellt. Das Stützelement ist in einer Innenöffnung im Gondelgehäuse angeordnet und läuft mittels einer Lageranordnung in dieser Innenöffnung ab. Die Lager der Lageranordnung sind bevorzugt wassergeschmiert und von statischen, asymmetrischen Flächenpressungen weitgehend entlastet, da erfindungsgemäß dem Stützelement ein Auftriebsvolumen zugeordnet ist. Entsprechend ist der Zwischenbereich zwischen dem Stützelement und der Innenwandung der Innenöffnung im Gondelgehäuse wassergeflutet. Im einfachsten Fall ist der Zutritt von Umgebungswasser in diesen Zwischenbereich möglich. Für eine Ausgestaltung werden wasserturbinenseitig Sedimentdichtungen vorgesehen oder es wird gefiltertes Umgebungswasser dem Zwischenbereich zugeführt. Vorzugsweise entsteht dabei eine aus dem Zwischenbereich Sedimente nach außen tragende Ausströmung zum Umgebungsbereich hin. Allerdings sind auch Lageranordnungen denkbar; die ohne zusätzliche Schutzmaßnahmen von Umgebungswasser geflutet werden können.

Für eine erste Ausgestaltung des Stützelements ist dieses wenigstens in Teilbereichen als Hohlzylinder ausgebildet, so dass das Auftriebsvolumen durch mindestens einen flüssigkeitsdicht abgeschlossen, hohlen Innenbereich im Stützelement entsteht. Alternativ kann der Hohlraum ausgeschäumt oder mit einem Material geringer Dichte gefüllt sein. Ferner ist es denkbar, das Stützelement wenigstens zum Teil aus Materialien mit einer Dichte aufzubauen, die geringer als die des Umgebungsmediums ist. Des Weiteren kann das dem Stützelement zugeordnete Auftriebsvolumen durch separate Auftriebskörper realisiert werden, die wenigstens mittelbar mit dem Stützelement drehstarr verbunden sind. Derartige Stützelemente übernehmen vorzugsweise im Wesentlichen keine Tragfunktion. Für diesen Fall muss das Stützelement keine Volumenbereiche abschließen und kann wenigstens in Bereichen als Strebewerk ausgebildet sein.

Besonders bevorzugt wird durch die Ausgestaltung des Stützelements sowie der mit diesem verbundenen, umlaufenden Komponenten ein Bauteil der Energieerzeugungsanlage geschaffen, dessen Auftriebskraft die Lageranordnung entlastet. Aufgrund dieser Maßnahme können robuste, wassergeschmierte Lager Verwendung finden. Bevorzugt sind dies wassergeschmierte Gleitlager, diese bedürfen keiner speziellen Kapselung. Zusätzlich kann eine Gleitfläche eines solchen Lagers in einem zylindrischen Abschnitt der radial äußeren Wandung des Stützelements oder der radial inneren Wandung der Innenöffnung im Gondelgehäuse ausgebildet sein.

Durch die Auftriebswirkung des Stützelements in Verbindung mit einer großflächigen Bauweise der Lagerflächen kann der Mischreibungsbereich für Gleitlager schnell durchlaufen werden. Zugleich verbessert sich das Anlaufverhalten. Alternativ kann die Lageranordnung Lager mit einer Verlustschmierung umfassen, wodurch die Lageranordnung Wälzlager umfassen kann. Für diesen Fall sind die Lager wasserumspült, wobei das Wasser aufgrund der Verlustschmierung im Wesentlichen nicht in die Lager eintritt.

Des Weiteren wird durch die Einstellung der Auftriebskräfte und/oder der Gewichtskraft des Stützelements nicht nur Einfluss auf den Betrag der resultierenden Kraft genommen, sondern es wird zusätzlich der Angriffspunkt der Auftriebskraft im Verhältnis zum Schwerpunkt für die gesamte umlaufende Einheit eingestellt. Hierdurch können gezielt in den Lagern der Energieerzeugungsanlage, insbesondere den Lageranordnungen auf dem Stützelement, statische Vorspannkräfte eingestellt werden, die das Lagerspiel und damit die Neigung zu Schwingungen beim Umlauf verringern. Für ein solches Ausbalancieren der umlaufenden Einheit werden die Auftriebs- und Gewichtskräfte der weiteren umlaufenden Komponenten, insbesondere der Wasserturbine und der umlaufenden Haube, berücksichtigt beziehungsweise im Verhältnis zum Stützelement eingestellt.

Die gewünschte Beeinflussung der Kräftebilanz und/oder der am Stützelement angreifenden Momente durch die Auftriebs- und Schwerkraftanteile ergibt sich durch die erfindungsgemäß gewählte Struktur der Energieerzeugungsanlage, die der umlaufenden Einheit mit dem Stützelement im Vergleich zu einem Nabenring eines Außenläufers ein wesentlich größeres Auftriebsvolumen zuordnet.

Die Innenöffnung im Gondelgehäuse kann durch ein Gehäuseteil realisiert werden, das beispielsweise buchsenförmig oder hohlzylindrisch gestaltet ist. Innerhalb des die Innenöffnung bildenden Gehäuseteils ist der Generatorstator angebracht und grenzt an einen zylindrischen Teilabschnitt der radial inneren Wandung der Innenöffnung an. Aufgrund der Wasserführung im Luftspalt zwischen dem Generatorläufer und dem Generatorstator ist eine Abdichtung der elektrischen Komponente des elektrischen Generators notwendig. Hierzu kann eine elektrische Isolation der Ständerwicklungen und der Blechpakete im Generatorstator vorgenommen werden. Dies gelingt durch einen Verguss und/oder eine Lackierung und/oder eine Spaltrohranordnung.

Bevorzugt wird eine Ausgestaltung des Stützelements mit einer wenigstens abschnittsweise zylindrischen, radial äußeren Wandung. Im einfachsten Fall wird ein Hohlzylinder verwendet, auch mehrere Hohlzylinder können axial aneinander gesetzt werden. Eine besonders einfache Konstruktion entsteht, wenn das Stützelement entlang seiner axialen Erstreckung einen im Wesentlichen gleichbleibenden Radius aufweist. Die Lageranordnung liegt dann vorteilhaft auf einem großen Radius, der annähernd dem Luftspaltdurchmesser des elektrischen Generators entspricht.

Für eine Weitergestaltung der Erfindung liegen die Bereiche des Stützelements, die den Generatorläufer tragen, und die die Lageranordnung tragenden Bereiche auf unterschiedlichen Radien. Dabei kann das Stützelement einen Hohlzylinder umfassen, auf den ringförmige oder flanschförmige Abschnitte zum Abstützen radial großbauender Komponenten aufgesetzt sind. Ein hohes Maß an Gestaltungsfreiheit entsteht bei Verwendung separater Auftriebskörper. Diese können beispielsweise um eine die eigentliche Tragfunktion übernehmende, zylindrische Struktur am Stützkörper angeordnet sein.

Die Lageranordnung zum Ablauf des Stützelements in der Innenöffnung des Gondelgehäuses ist vorzugsweise eine Radiallageranordnung, so dass zur Aufnahme der Schubkräfte zusätzliche Axiallager vorgesehen werden, die gemäß einer ersten Ausgestaltung stirnseitig zum Stützelement innerhalb der Innenöffnung ausgebildet sind. Die Innenöffnung nimmt dann die Form einer Buchse ein. Gemäß einer alternativen, bevorzugten Gestaltung ist ein separates Axiallager an der zur Außenseite hinweisenden Stirnseite und damit am Außenrand der Innenöffnung angeordnet. Alternativ ist die Lageranordnung auf dem umlaufenden Stützelement als kombiniertes Radial- und Axiallager ausgebildet und nimmt beispielsweise eine konische oder V-förmige Gestalt an.

Für eine Weitergestaltung der Erfindung schließt sich an das Stützelement an einem ersten, zur Außenumgebung hinweisenden, axialen Ende ein scheibenförmiges Element an, dessen radiale Erstreckung größer ist als jene des Stützelements. Dabei liegt das scheibenförmige Element außerhalb der Innenöffnung im Gondelgehäuse. Entlang des Außenumfangs des scheibenförmigen Elements sind die Turbinenblätter der Wasserturbine angeordnet. Zusätzlich sind auf der zum Gondelgehäuse hinweisenden Stirnfläche des scheibenförmigen Elements, die über die radiale Erstreckung des Stützelements hinausragt, Komponenten für eine Axiallageranordnung angebracht. Entsprechende Gegenkomponenten sind in diesem Bereich am gegenüberliegenden Teil des Gondelgehäuses vorgesehen. Durch diese Maßnahme können in axialer Nähe der Krafteinleitungspunkte der Wasserturbine die wesentlichen axialen Schubkräfte aufgenommen werden. Die genannte Axiallageranordnung umfasst wiederum bevorzugt wassergeschmierte Gleitlager. Ferner können wieder Vorrichtungen zum Abhalten von Sedimenten an den zur Außenseite hingewandten Bereichen vorgesehen sein.

Für eine Gestaltung mit einem scheibenförmigen Element, das sich axial an das Stützelement anschließt, ergibt sich eine hohe Strukturfestigkeit für die Einleitung der von den Turbinenblättern aufgebrachten Kräfte. Dies gründet auf dem Umstand, dass die gesamte radiale Erstreckung des scheibenförmigen Elements großbauend ausgeführt werden kann, ohne die Strömung wesentlich zu verblocken. Gleichzeitig sind die Bereiche mit hoher Verformungsgefahr, insbesondere die Krafteinleitungspunkte der Turbinenblätter am scheibenförmigen Element, hinreichend von den Lagern beabstandet, so dass diese beim Betrieb der Anlage nur geringen Verformungen unterliegen.

Für eine weitere Ausgestaltung der Erfindung ist das umlaufende Stützelement als doppelwandiger Hohlzylinder ausgebildet, was den Durchgriff von der turmseitigen Stirnfläche des Stützelements zur turbinenseitigen Stirnfläche, beispielsweise zur Realisierung einer Pitch-Verstellung der Turbinenblätter, erlaubt. Ferner kann bei einer entsprechend geschlossenen Bauweise oder durch die Zuordnung von separaten Auftriebskörpern dem scheibenförmigen Element ein eigenes Auftriebsvolumen zugeordnet werden.

Nachfolgend wird die Erfindung anhand von Ausführungsbeispielen in Verbindung mit Figurenskizzen näher erläutert. In diesen ist im Einzelnen Folgendes dargestellt:
- Figur 1: zeigt eine perspektivische Ansicht der umlaufenden Einheit einer erfindungsgemäßen Energieerzeugungsanlage.
- Figur 2: zeigt eine erfindungsgemäße Energieerzeugungsanlage im Längsschnitt.
- Figur 3: zeigt eine erfindungsgemäße Energieerzeugungsanlage für eine bidirektionale Anströmung im Längsschnitt.
- Figur 4: zeigt eine weitere Gestaltung einer erfindungsgemäßen Energieerzeugungsanlage mit separaten Antriebskörpern.

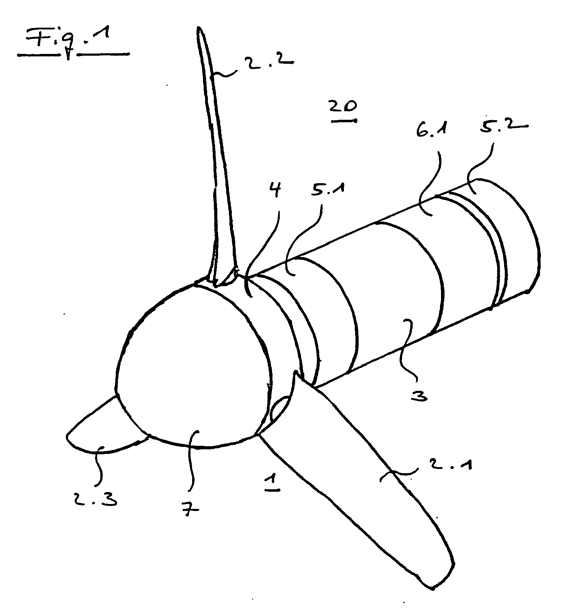

Figur 1 zeigt perspektivisch die umlaufende Einheit 20 einer erfindungsgemäßen Energieerzeugungsanlage, die allseitig vom Umgebungswasser berührt wird.

Dargestellt ist eine Wasserturbine 1, die für die gezeigte Ausgestaltung die propellerförmig angelegten Turbinenblätter 2.1, 2.2, 2.3 umfasst. Die Turbinenblätter 2.1, 2.2, 2.3 sind für die dargestellte, bevorzugt Ausgestaltung an einem scheibenförmigen Element 4 angelenkt, wobei diese Verbindung drehstarr oder mit einem Blattwinkelverstellmechanismus ausgeführt werden kann.

An das scheibenförmige Element 4 schließt sich axial ein Stützelement 3 an. Auf dem Stützelement 3 ist für den Ablauf innerhalb einer Innenöffnung im feststehenden Gondelgehäuse (nicht in Figur 1 dargestellt) eine Lageranordnung vorgesehen. Vorliegend sind jeweils die umlaufenden Komponenten eines ersten Radiallagers 5.1 und eines zweiten Radiallagers 5.2 in Form von Gleitlagerkomponenten gezeigt, wobei die Gleitflächen in die Bereiche der Wandungen des Stützelements eingearbeitet sind. Ferner wird der Generatorläufer 6.1 vom Stützelement 3 getragen.

Für eine bevorzugte Ausgestaltung weist das Stützelement 4 einen solchen Durchmesser auf, dass dessen radial äußere Wandung den Generatorläufer 6.1 eines elektrischen Generators und Lagerkomponenten einer Lageranordnung trägt. Die Abstützung der Lageranordnung erfolgt unmittelbar an Gegenkomponenten an Wandungsabschnitten in der Innenöffnung, deren Innenradius im Wesentlichen bis zum Luftspalt des elektrischen Generators 9 zwischen dem Generatorläufer 6.1 und dem Generatorstator 6.2 geführt ist.

Das Stützelement kann aus einzelnen Zylindersegmenten, die axial aneinander anschließen, zusammengesetzt sein. Bevorzugt umfasst das Stützelement Teilbereiche, die eine zylindrische, radial äußere Wandungsfläche aufweisen. Dabei ist es denkbar, dass diese Teilbereiche in ihrer radialen Erstreckung voneinander abweichen. Bevorzugt werden diese zylindrischen Teilbereiche zum Tragen der dem Stützelement zugeordneten Komponenten einer Lageranordnung sowie zur Abstützung des Generatorläufers 6.1 verwendet.

Die in Figur 1 gezeigten, drehstarr miteinander verbundenen Komponenten der umlaufenden Einheit befinden sich während des Betriebs der Energieerzeugungsanlage im Wasser. Demnach ist der Generatorläufer 6.1 als Nassläufer ausgebildet. Entsprechend ist die Lageranordnung 5.1. 5.2, die vom Stützelement 3 getragen wird, als wassergeschmierte Lagerung gestaltet.

Des Weiteren sind Ausgestaltungen der Erfindung denkbar, für die Dichtlippen zum Schutz der Lager gegen einen zu großen Eintrag von Sedimenten vorgesehen sind. Allerdings sollten diese das Umgebungswasser nicht gänzlich abhalten, um das Umgebungsmedium als Schmierstoff der Lageranordnung zuzuführen. Alternativ kann Umgebungswasser, vorzugsweise nach einem Durchlauf durch ein Filtersystem, vom feststehenden Teil der Energieerzeugungsanlage der Lageranordnung zugeführt werden.

Ein Vorteil eines voluminös bauenden Stützelements 3 ist darin zu sehen, dass hierdurch eine signifikante Auftriebskraft erzeugt werden kann, die die Schwerkraft der umlaufenden Einheit 20 wenigstens teilweise und vorzugsweise gänzlich kompensiert. Dies minimiert die Flächenpresskräfte in den Radiallagern, so dass es möglich ist, die voranstehend beschriebenen, bevorzugten wassergeschmierten Lager einzusetzen. Darüber hinaus wird für diesen Lagerungstyp aufgrund der gleichmäßigen Flächenbelastung eine Mischreibungsphase in den Lagern beim Anlaufen schnell durchfahren. Dies verbessert insbesondere die Selbstanlaufeigenschaften einer erfindungsgemäßen Energieerzeugungsanlage sowie deren Umlaufverhalten für geringe Strömungsgeschwindigkeiten in der antreibenden Wasserströmung.

In Figur 1 ist als zusätzliches Teil der umlaufenden Einheit die umlaufende Haube 7 dargestellt. Diese kann ebenfalls als Auftriebskörper genutzt werden. Allerdings gelingt es erst durch das Stützelement 3, das axial gegenüberliegend zur umlaufenden Haube 7 im Verhältnis zur Wasserturbine 1 positioniert ist, den Kraftangriffsdruck der Auftriebskräfte gegenüber dem Schwerpunkt der umlaufenden Einheit vorteilhaft einzustellen. Hierunter wird verstanden, dass Einfluss auf das Kippmoment genommen wird, das durch einen Abstand des Kraftangriffspunkts der Auftriebskraft und des Schwerpunkts entsteht. Dabei ist anzumerken, dass für eine vorteilhafte Ausgestaltung der Erfindung ein festgelegtes Kippmoment eingestellt wird, das dazu dient, die Lageranordnung und insbesondere deren Radiallagerkomponenten, definiert vorzuspannen, um Lagerschwingungen während des Umlaufs zu vermeiden.

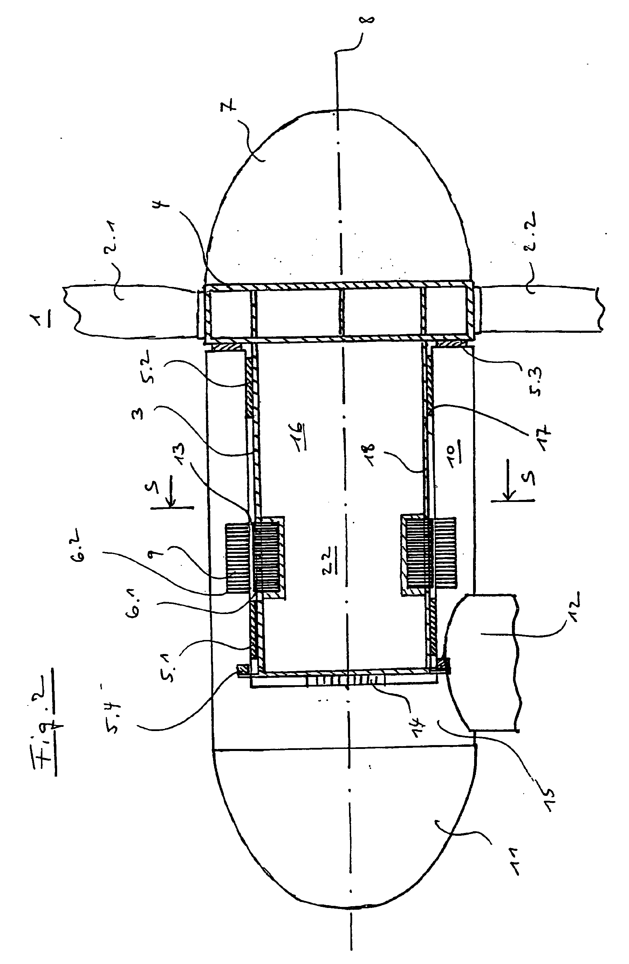

Figur 2 zeigt einen Schnitt entlang der Längsachse 8 durch eine Ausgestaltung einer erfindungsgemäßen Energieerzeugungsanlage. Dabei ist die voranstehend beschriebene, umlaufende Einheit 20, umfassend eine Wasserturbine 1, ein scheibenförmiges Element 4 und ein Stützelement 3 sowie eine umlaufende Haube 7, im Einbauzustand dargestellt, d.h. das Stützelement 3 ist innerhalb eines eine zylindrische Innenöffnung 16 bildenden Gehäuseteils 10 eingeführt und stützt sich mit einer Lageranordnung, die für die vorliegende Gestaltung ein erstes Radiallager 5.1 und ein zweites Radiallager 5.2 aufweist, gegen die radial innere Wandung der zylindrischen Innenöffnung 16 ab.

Der Zwischenbereich zwischen der Innenwandung der zylindrischen Innenöffnung 16 im Gondelgehäuse 15 und dem Stützelement 3 ist wassergeflutet. Demnach wird auch im Luftspalt 13 zwischen dem Generatorläufer 6.1 und dem Generatorstator 6.2 des Generators das Umgebungswasser geführt. Außerdem sind das erste Radiallager 5.1 und das zweite Radiallager 5.2 als wassergeschmierte Lager ausgebildet.

Die weiteren Lagerkomponenten, die zur Abstützung axialer Kräfte dienen, sind für das vorliegende Ausführungsbeispiel stirnseitig zur zylindrischen Innenöffnung 16 zwischen dem Gondelgehäuse 15 und dem scheibenförmigen Element 4 angebracht. Hierzu ist ein erstes Axiallager 5.3 ersichtlich. Ein zweites Axiallager 5.4 ist an dem zur Tragstruktur 13 hinweisenden axialen Ende des Stützelements 3 vorgesehen. Hierzu ist das zweite Axiallager 5.4 skizziert, das die nach außen gerichteten Axialkräfte auffängt. Für die dargestellte Luvläuferanordnung sind die wesentlichen, auf die umlaufende Einheit 20 wirkenden Axialkräfte Presskräfte in Richtung des Gondelgehäuses 15, so dass das zweite Axiallager 5.4 lediglich als Sicherheitslager gegen ein Herausrutschen bei einer falschen Anströmungsrichtung dient.

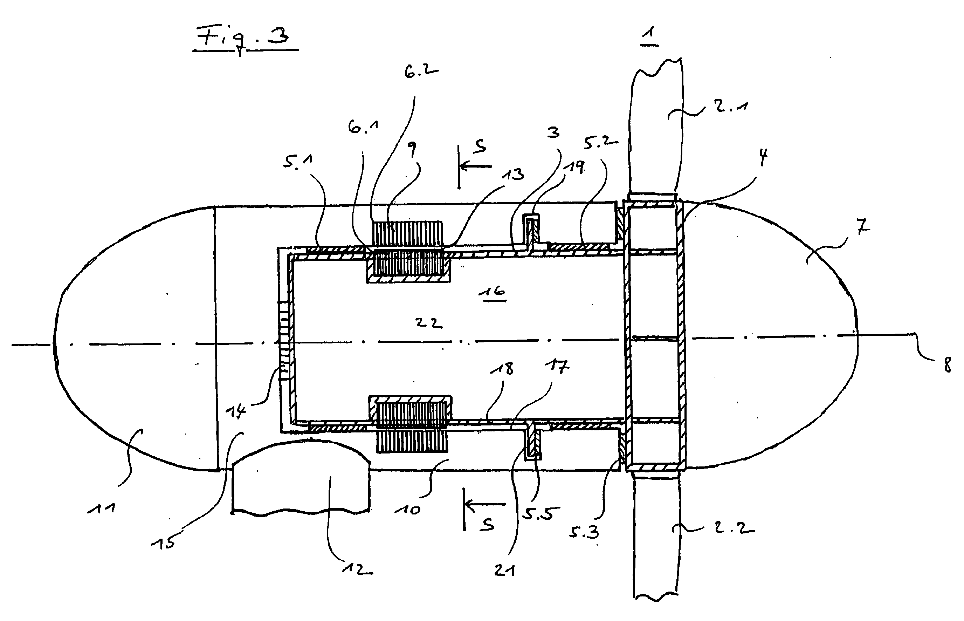

Ferner sind Ausgestaltungen der erfindungsgemäßen Energieerzeugungsanlage als Leeläufer denkbar oder die Wasserturbine 1 ist bidirektional anströmbar und eine Einrichtung zur Turmdrehung ist nicht notwendig. Entsprechend werden die Axiallagerkomponenten an die beim Betrieb auftretenden Axialkräfte angepasst. Eine mögliche Ausgestaltung für eine aus zwei Richtungen anströmbare Wasserturbine ist in Figur 3 skizziert, wobei für übereinstimmende Komponenten die gleichen Bezugszeichen verwendet werden. Dargestellt ist ein zweites Axiallager 5.5, das gondelgehäuseseitig in einer ringförmigen Ausnehmung 19 platziert ist und eine zum ersten Axiallager 5.3 entsprechende Ausdehnung aufweist. Dabei stützt sich das Stützelement 3 über einen nach radial außen in die Ausnehmung 19 greifenden Kragen 21 am zweiten Axiallager 5.5 ab. Ferner sind das erste Axiallager 5.3 und das zweite Axiallager 5.5 axial nah zur Wasserturbine angeordnet, um Verformungen des Stützelements 3 möglichst gering zu halten.

Für die in den Figur 2 und 3 dargestellten Ausgestaltungen der Erfindung sind die Turbinenblätter 2.1, 2.2 der Wasserturbine 1 an einem scheibenförmigen Element 4 angelenkt, das in drehstarrer Verbindung zum Stützelement 3 steht und welches an einer der Stirnseiten des Stützelements 3 mit diesem drehstarr verbunden ist. Das scheibenförmige Element 4 ragt bezüglich seiner radialen Erstreckung bevorzugt über das Stützelement 3 hinaus, so dass ein dem Gondelgehäuse 15 gegenüberliegender Kragen an der Eingangsseite der zylindrischen Innenöffnung im Gondelgehäuse 15 entsteht. Dabei kann vorteilhaft das erste Axiallager 5.3 angelegt werden, das für einen Luvläufer die Schubkräfte der Wasserturbine 1 auffängt.

Das scheibenförmige Element 4 ist aufgrund seiner großen radialen Baugröße mit einer hohen Struktursteifigkeit ausgezeichnet. Bevorzugt wird darüber hinaus, das scheibenförmige Element 4 so auszubilden, dass die über die Turbinenblätter 2.1, 2.2 eingetragenen Verformungen keinen wesentlichen Einfluss auf die die Komponenten der Lageranordnung tragenden Bereiche nehmen. Des Weiteren können das scheibenförmige Element 4 und das Stützelement 3 ausgesteift sein oder eine zur Strukturfestigkeit beitragende Ausschäumung aufweisen. Dies ist im Einzelnen nicht in Figur 2 dargestellt.

Der elektrische Generator 9 mit dem vom Umgebungswasser gefluteten Luftspalt 13 umfasst als wesentliche Komponente den vom Stützelement 3 getragenen Generatorläufer 6.1 und den im Gehäuseteil 10 untergebrachten Generatorstator 6.2. Entsprechend der Nassläuferkonfiguration werden der Generatorläufer 6.1 und der Generatorstator 6.2 elektrisch isoliert. Hierfür kommt eine elektrische Isolation in Form von Lacken oder Vergussmassen in Frage. Alternativ kann ein Spaltrohr, beispielsweise aus einem nichtmagnetischen Stahl, etwa einem Austenit-Stahl, Verwendung finden. Für weitere Ausführungsformen wird das Spaltrohr mittels eines Elastomerwerkstoffs ausgebildet und schließt beispielsweise die Ständerwindungen und die Blechpakete des Generatorstators 6.2 hermetisch vom Umgebungswasserbereich ab. Entsprechende Abdichtungsmaßnahmen können für den Generatorläufer 6.1 vorgesehen sein, so weit dieser fremderregt ausgeführt ist und Erregerwicklungen trägt. Alternativ oder zusätzlich werden Permanentmagnete für eine vorteilhafte Ausgestaltung verwendet.

Durch die erfindungsgemäß gewählte Anordnung des Generators 9 ist eine effiziente Kühlung des nach radial außen weisenden Generatorstators 6.2 und des als Nassläufer ausgebildeten Generatorläufers 6.1 gegeben. Die Generatorkühlung kann mit zusätzlichen Maßnahmen, etwa Kühlrippen auf der Außenseite des Gondelgehäuses 15 im Bereich des Generators 9, verbessert werden. Des Weiteren ist die Verwendung von Wärmeleitrohren oder von Kühlkanälen, durch die beispielsweise das Umgebungswasser geführt wird, für den Generatorstator 6.2 und den Generatorläufer 6.1 denkbar.

Wie in Figur 2 skizziert, wird bevorzugt, den Generator 9 gegenüber dem Stützelement 3 asymmetrisch anzuordnen und zum Bereich der Tragstruktur hin zu verschieben. Unter einer asymmetrischen Anordnung wird vorliegend verstanden, dass der Generator 9 bezüglich seiner axialen Lage auf dem Stützelement außermittig angeordnet ist. Dabei ist die mittig verlaufende Symmetrieebene für das Stützelement 3 durch die Schnittlinie S-S in Figur 1 angedeutet. Die asymmetrische Anordnung des Generators 9 dient der Verschiebung des schwerbauenden Generators zur Tragstruktur 12 hin.

Des Weiteren ist es möglich, das Stützelement 3 axial so langbauend auszubilden, dass der sich durch die Tragstruktur 12 und das Gondelgehäuse 15 bildende Turmvorstau eines Luvläufers im Bereich der Wasserturbine 1 verringert. Entsprechendes gilt für den Turmschatteneffekt bei einem Leeläufer. Zugleich kann, wie voranstehend dargelegt, die Lage des Masseschwerpunkts und des Antriebspunkts der Auftriebskräfte durch die Gestaltung des Stützelements 3, sowie der Gewichtsverteilung der umlaufenden Komponenten vorteilhaft zur Beeinflussung der Lagervorspannung verwendet werden.

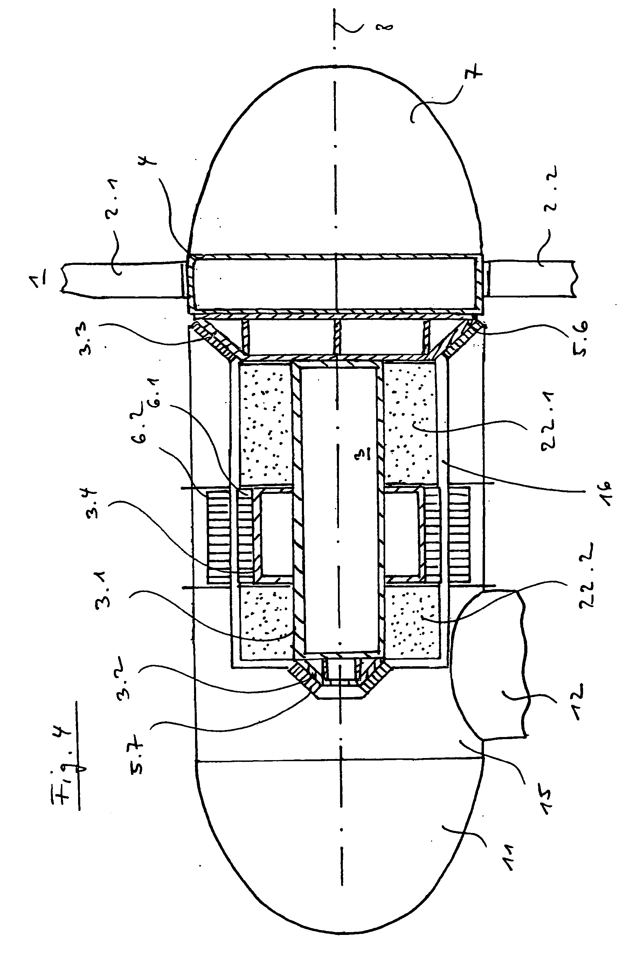

Eine weitere Ausgestaltung ist in Figur 4 skizziert, für die, abweichend von den voranstehend genannten Ausführungsbeispielen, separate Auftriebskörper 22.1 und 22.2 verwendet werden. Diese umgeben ringförmig einen zylindrischen Abschnitt 3.1 des Stützkörpers und übernehmen keine Kräfte der Lageranordnung und des Generatorläufers. Dabei ist es aufgrund der Ringstruktur nicht zwingend notwendig, die separaten Auftriebskörper 22.1, 22.2 mit der umlaufenden Einheit mit zubewegen. So können die gewünschten Auftriebskräfte auch für eine Relativbewegung in Umfangsrichtung zwischen dem zylindrischen Abschnitt 3.1 und den separaten Auftriebskörpern 22.1, 22.2 übertragen werden. Die separaten Auftriebskörper 22.1, 22.2 können als Hohlkörper ausgebildet sein oder aus einem schwimmfähigen Material bestehen.

Ferner besteht für die in Figur 4 gezeigt Variante der Stützkörper 3 aus mehreren Einzelsegmenten, die aufgrund der separaten Auftriebskörpern 22.1, 22.2 nicht zwingend abgedichtete Hohlräume schaffen müssen und damit einfacher miteinander verbunden werden können. Dabei umfasst das Stützelement 3 neben dem zylindrischen Abschnitt 3.1 einen sich von diesem aus radial erstreckenden, ringförmigen Abschnitt 3.4 zum Tragen des Generatorläufers 6.1. Außerdem schließen sich axial zu beiden Seiten ein erster konischer Abschnitt 3.2 und ein zweiter konischer Abschnitt 3.3 an den zylindrischen Abschnitt 3.1 an. Auf diesem sind kombinierte Axial- und Radiallager 5.6, 5.7 in V-Form angelegt, die sich an Gegenkomponenten an den Innenwandungen der Innenöffnung 16 im Gondelgehäuse 15 abstützen.

Eine erfindungsgemäße Energieerzeugungsanlage kann zusätzliche optionale Komponenten aufweisen. Exemplarisch ist hierzu in Figur 2 eine stirnseitig am Stützelement 3 angebrachte Bremse 14 dargestellt. Ferner ist es denkbar, das Stützelement 3 in Form eines doppelwandigen Hohlzylinders auszubilden, der es erlaubt, im achsnahen Bereich eine mechanische Durchführung zur Pitchverstellung für die Turbinenblätter 2.1, 2.2 zu realisieren, die vom feststehenden Teil des Gondelgehäuses 15 aus bedient wird. Alternativ kann eine Pitchverstellung mit einer berührungsfreien Energieübertragungseinrichtung, die beispielsweise induktiv arbeitet, versehen sein. Des Weiteren kann im Bauraum an der Stirnseite des Stützelements 3 ein Drehzahlmesser und/oder ein Detektionssystem zur Bestimmung der Polradlage untergebracht werden. Weitere Ausgestaltungen der Erfindung sind im Rahmen des fachmännischen Könnens denkbar und werden durch den Rahmen der nachfolgenden Schutzansprüche abgegrenzt.

### Bezugszeichenliste

- 1: Wasserturbine
- 2.1, 2.2, 2.3: Turbinenblätter
- 3: Stützelement
- 3.1: zylindrischer Abschnitt
- 3.2, 3.3: konischer Abschnitt
- 3.4: ringförmiger Abschnitt
- 4: scheibenförmiges Element
- 5.1: erstes Radiallager
- 5.2: zweites Radiallager
- 5.3: erstes Axiallager
- 5.4, 5.5: zweites Axiallager
- 6.1: Generatorläufer
- 6.2: Generatorstator
- 7: umlaufende Haube
- 8: Längsachse
- 9: elektrischer Generator
- 10: eine Innenöffnung bildendes Gehäuseteil
- 11: feststehende Haube
- 12: Tragstruktur
- 13: Luftspalt
- 14: Bremse
- 15: Gondelgehäuse
- 16: Innenöffnung
- 17: radial innere Wandung
- 18: radial äußere Wandung
- 19: ringförmige Ausnehmung
- 20: umlaufende Einheit
- 21: Kragen
- 22: Auftriebsvolumen
- 22.1, 22.2: separater Auftriebskörper

## Patentansprüche

1. Energieerzeugungsanlage zur Gewinnung elektrischer Energie aus einer Wasserströmung, umfassend:
1.1 eine umlaufende Einheit (20) mit einer Wasserturbine (1);
1.2 einen direkt angetriebenen elektrischen Generator (9) mit einer koaxialen Anordnung von Generatorläufer (6.1) und Generatorstator (6.2);
1.3 ein Gondelgehäuse (15) mit einem eine zylindrische Innenöffnung bildenden Gehäuseteil (10), in dem der Generatorstator (6.2) angeordnet ist;
1.4 ein Stützelement (3) als Teil der umlaufenden Einheit (20), das koaxial und radial innerhalb der Innenöffnung (16) angeordnet ist und das den Generatorläufer (6.1) trägt;
1.5 eine Lageranordnung zum Ablauf des Stützelements (3) in der Innenöffnung (16), mit Lagerkomponenten (5.1, 5.2), die radial innen an der Innenöffnung (16) oder radial außen am Stützelement (3) angebracht und/oder an einem Wandungsbereich der Innenöffnung (16) oder des Stützelements (3) ausgebildet sind;
1.6 wobei der Zwischenbereich zwischen dem Stützelement (3) und der Innenöffnung (16) geflutet ist und das Stützelement (3) ein Auftriebsvolumen (22) umfasst, das im getauchten Zustand eine Auftriebskraft erzeugt, die die Gewichtskraft der umlaufenden Einheit (20) wenigstens teilweise kompensiert.

2. Energieerzeugungsanlage nach Anspruch 1 , **dadurch gekennzeichnet, dass** das Stützelement (3) im getauchten Zustand so zur Auftriebskraft der umlaufenden Einheit (20) beiträgt, dass das aus der Auftriebskraft und der Schwerkraft der umlaufenden Einheit (20) resultierende Kippmoment, die Lageranordnung definiert vorspannt.

3. Energieerzeugungsanlage nach einem der vorausgehenden Ansprüche, **dadurch gekennzeichnet, dass** das Stützelement (3) wenigstens einen flüssigkeitsdicht abgeschlossenen, hohlzylindrischen Abschnitt umfasst.

4. Energieerzeugungsanlage nach einem der vorausgehenden Ansprüche, **dadurch gekennzeichnet, dass** das Stützelement (3) wenigstens in einem Teilabschnitt mit einem Material gefüllt ist, dessen Dichte geringer ist als die des Umgebungswassers oder wenigstens in Teilen aus einem solchen Material besteht.

5. Energieerzeugungsanlage nach einem der vorausgehenden Ansprüche, **dadurch gekennzeichnet, dass** das Stützelement (3) als Auftriebsvolumen (22) einen Auftriebskörper umfasst, der im Wesentlichen keine Stützkräfte aufnimmt und/oder von einem separaten Auftriebskörper (22.1, 22.2) angehoben wird.

6. Energieerzeugungsanlage nach einem der vorausgehenden Ansprüche, **dadurch gekennzeichnet, dass** der elektrische Generator (9) gegenüber der Längserstreckung der zylindrischen Innenöffnung (16) im Gondelgehäuse (15) asymmetrisch angeordnet und zur Tragstruktur (12) hin verschoben ist.

7. Energieerzeugungsanlage nach einem der vorausgehenden Ansprüche, **dadurch gekennzeichnet, dass** das die zylindrische Innenöffnung (16) bildende Gehäuseteil (10) als Hohlzylinder oder buchsenförmig ausgebildet ist.

8. Energieerzeugungsanlage nach einem der vorausgehenden Ansprüche, **dadurch gekennzeichnet, dass** das die zylindrische Innenöffnung (16) bildende Gehäuseteil (10) in Form mehrerer aneinander anschließender Ringelemente ausgebildet ist, wobei der Generatorstator in einem der Ringelemente aufgenommen ist.

9. Energieerzeugungsanlage nach einem der vorausgehenden Ansprüche, **dadurch gekennzeichnet, dass** die Wasserturbine (1) ein scheibenförmiges Element (4) umfasst, an dem mehrere Turbinenblätter (2.1, 2.2, 2.3) befestigt sind, wobei das scheibenförmige Element (4) mit dem Stützelement (3) in drehstarrer Verbindung steht und radial über dieses hinaussteht.

10. Energieerzeugungsanlage nach Anspruch 9, **dadurch gekennzeichnet, dass** das scheibenförmige Element (4) sich mittels eines wassergeschmierten ersten Axiallagers (5.3) gegen eine Stirnfläche des die zylindrische Innenöffnung (16) bildende Gehäuseteils (10) abstützt.

11. Energieerzeugungsanlage nach einem der vorausgehenden Ansprüche, **dadurch gekennzeichnet**, das der Generatorstator (6.2) und/oder der Generatorläufer (6.1) wasserdicht gekapselt sind.

12. Energieerzeugungsanlage nach Anspruch 11, **dadurch gekennzeichnet, dass** zur Kapselung des Generatorstators (6.2) und/oder des Generatorläufers (6.1) eine Spaltrohranordnung und/oder eine elektrische Isolation aus einem korrosionsbeständigen, nichtmagnetischen Werkstoff und besonders bevorzugt aus einem korrosionsbeständigen, nichtferromagnetischen Werkstoff verwendet wird.

13. Energieerzeugungsanlage nach einem der vorausgehenden Ansprüche, **dadurch gekennzeichnet, dass** der Generatorläufer (6.1) Permanentmagnete und/oder eine Anordnung zur Fremderregung umfasst, der berührungslos Erregerleistung vom drehfesten Teil der Energieerzeugungsanlage zugeführt wird.

14. Energieerzeugungsanlage nach einem der vorausgehenden Ansprüche, **dadurch gekennzeichnet, dass** das Stützelement (3) einen Durchgang in Axialrichtung entlang der Längsachse (8) aufweist, in dem ein mechanischer Verstellmechanismus zur Winkeleinstellung (Pitch) der Turbinenblätter (2.1, 2.2, 2.3) der Wasserturbine (1) angelegt ist.

## Claims

1. An energy production facility for generating electrical energy from a water flow, including:
1.1 a rotating unit (20) with a water turbine (1);
1.2 a directly driven electrical generator (9) with a coaxial arrangement of generator rotor (6.1) and generator stator (6.2);
1.3 a gondola housing (15) with a casing section (10) forming a cylindrical inner opening, wherein the generator stator (6.2) is arranged;
1.4 a supporting element (3) as a part of the rotating unit (20), which is arranged coaxially and radially inside the inner opening (16) and carries the generator rotor (6.1);
1.5 a bearing assembly at the outlet of the supporting element (3) in the inner opening (16), with bearing components (5.1, 5.2), which are mounted radially and inwardly on the inner opening (16) or radially and outwardly on the supporting element (3) and/or are provided on a side surface area of the inner opening (16) or of the supporting element (3);
1.6 wherein the intermediate area is flooded between the supporting element (3) and the inner opening (16) and the supporting element (3) includes a buoyancy volume (22), which when immersed generates a buoyancy force, which at least partially compensates for the gravitational force of the rotating unit (20).

2. An energy production facility according to claim 1, **characterised in that** the supporting element (3) when immersed contributes to the buoyancy force of the rotating unit (20) in such a way that the tilt torque resulting from the buoyancy force and the force of gravity of the rotating unit (20) prestresses the bearing assembly in a set manner.

3. An energy production facility according to one of the previous claims, **characterised in that** the supporting element (3) includes at least one liquid-tight, hollow cylindrical section.

4. An energy production facility according to one of the previous claims, **characterised in that** the supporting element (3) is filled at least in a partial section with a material, whose density is smaller than that of the surrounding water or at least consists of such a material in certain portions.

5. An energy production facility according to one of the previous claims, **characterised in that** the supporting element (3) includes a buoyancy body as a buoyancy volume (22), which substantially does not absorb any supporting forces and/or is raised by a separate buoyancy body (22.1, 22.2).

6. An energy production facility according to one of the previous claims, **characterised in that** the electrical generator is arranged asymmetrically with respect to the longitudinal span of the cylindrical inner opening (16) in the gondola housing (15) and is moved towards the carrying structure (12).

7. An energy production facility according to one of the previous claims, **characterised in that** the casing section (10) forming the cylindrical inner opening (16) is designed as a hollow cylinder or shell-shaped.

8. An energy production facility according to one of the previous claims, **characterised in that** the casing section (10) forming the cylindrical inner opening (16) is designed as several ring elements connected to one another, wherein the generator stator is accommodated in one of the ring elements.

9. An energy production facility according to one of the previous claims, **characterised in that** the water turbine (1) includes a disk-shaped element (4),on which several turbine blades (2.1, 2.2, 2.3) are secured, wherein the disc-shaped element (4) is fixedly connected to the supporting element (3) and protrudes radially over said element.

10. An energy production facility according to claim 9, **characterised in that** the disc-shaped element (4) is supported by means of a water lubricated first axial bearing (5.3) against a front surface of the casing section (10) forming the cylindrical inner opening (16).

11. An energy production facility according to one of the previous claims **characterised in that** the generator stator (6.2) and/or the generator rotor (6.1) are water-tight encapsulated.

12. An energy production facility according to claim 11, **characterised in that** for encapsulating the generator stator (6.2) and/or the generator rotor (6.1), a gap tube assembly and/or an electric insulation composed of corrosion resistant, non-magnetic material and particularly preferably corrosion resistant non-ferromagnetic material, is used.

13. An energy production facility according to one of the previous claims, **characterised in that** the generator rotor (6.1) includes permanent magnets and/or an arrangement for external excitation, to which the excitation power is conveyed contactless from the torque-proof part of the energy production facility.

14. An energy production facility according to one of the previous claims, **characterised in that** the supporting element (3) includes a passage in axial direction along the longitudinal axis (8), wherein a mechanical adjustment mechanism is arranged for angle adjustment (pitch) of the turbine blades (2.1, 2.2, 2.3) of the water turbine (1).

## Revendications

1. Centrale génératrice d'énergie pour la production d'énergie électrique à partir d'un courant d'eau, comprenant:
1.1 une unité rotative (20) avec une turbine à eau (1);
1.2 un générateur électrique (9) à entraînement direct avec un agencement coaxial de rotor de générateur (6.1) et de stator de générateur (6.2);
1.3 un carter de gondole (15) avec une portion carter (10) formant une ouverture interne cylindrique (10), dans laquelle le stator de générator (6.2) est disposé;
1.4 un élément d'appui (3) faisant partie de l'unité rotative (20), qui est disposé coaxialement et radialement à l'intérieur de l'ouverture interne (16) et qui porte le rotor de générateur (6.1);
1.5 un agencement de palier à la sortie de l'élément d'appui (3) dans l'ouverture interne (16), avec les composants de palier (5.1, 5.2), qui sont montés radialement à l'intérieur sur l'ouverture interne (16) ou radialement à l'extérieur sur l'élément d'appui (3) et/ou sont constitués sur une paroi latérale de l'ouverture interne (16) ou de l'élément d'appui (3);
1.6 la zone intermédiaire étant inondée entre l'élément d'appui (3) et l'ouverture interne (16) et l'élément d'appui (3) comprenant un volume de flottaison (22), qui en immersion génère une force de flottaison,permettant de compenser au moins partiellement la force de pesanteur de l'unité rotative (20).

2. Centrale génératrice d'énergie selon la revendication 1, **caractérisée en ce que** l'élément d'appui (3) en immersion contribue à la force de flottaison de l'unité rotative (20) de telle sorte que le couple d'inclinaison résultant de la force de flottaison et du centre de gravité de l'unité rotative (20) précontraint l'agencement de palier de manière bien précise.

3. Centrale génératrice d'énergie selon l'une quelconque des revendications précédentes, **caractérisée en ce que** l'élément d'appui (3) comprend au moins une section cylindrique creuse et étanche au fluide.

4. Centrale génératrice d'énergie selon l'une quelconque des revendications précédentes, **caractérisée en ce que** l'élément d'appui (3) est rempli au moins partiellement d'un matériau dont l'intensité est inférieure à celle de l'air environnant ou se compose d'un tel matériau au moins dans certaines parties.

5. Centrale génératrice d'énergie selon l'une quelconque des revendications précédentes, **caractérisée en ce que** l'élément d'appui (3) comprend en guise de volume de flottaison (22) un flotteur, qui n'absorbe pratiquement pas de forces d'appui et/ou est surélevé par un flotteur séparé (22.1, 22.2).

6. Centrale génératrice d'énergie selon l'une quelconque des revendications précédentes, **caractérisée en ce que** le générateur électrique (9) est disposé assymétriquement en face de l'étendue longitudinale de l'ouverture interne cylindrique (16) dans le carter de gondole (15) et est décalé par rapport à la structure portante (12).

7. Centrale génératrice d'énergie selon l'une quelconque des revendications précédentes, **caractérisée en ce que** la portion carter (10) constituant l'ouverture interne cylindrique (16) est en forme de cylindre creux ou de douille.

8. Centrale génératrice d'énergie selon l'une quelconque des revendications précédentes, **caractérisée en ce que** la portion carter (10) constituant l'ouverture interne cylindrique (16) est sous forme de plusieurs éléments annulaires connectés l'un après l'autre, le stator de générator étant logé dans l'un des éléments annulaires.

9. Centrale génératrice d'énergie selon l'une quelconque des revendications précédentes, **caractérisée en ce que** la turbine à eau (1) comprend un élément en forme de disque (4), sur lequel sont fixées plusieurs pales de turbine (2.1, 2.2, 2.3), l'élément (4) en forme de disque étant connecté de manière rigide en torsion à l'élément d'appui (3) et faisant saillie radialement au-dessus de celui-ci.

10. Centrale génératrice d'énergie selon la revendication 9, **caractérisée en ce que** l'élément en forme de disque (4) s'appuie à l'aide d'un premier palier axial (5.3) hydrolubrifié contre une surface frontale de la portion carter (10) constituant l'ouverture interne cylindrique (16).

11. Centrale génératrice d'énergie selon l'une quelconque des revendications précédentes, **caractérisée en ce que** le stator de générator (6.2) et/ou le rotor de générateur (6.1) sont encapsulés de manière étanche à l'eau.

12. Centrale génératrice d'énergie selon la revendication 11, **caractérisée en ce que** pour encapsuler le stator de générator (6.2) et/ou le rotor de générateur (6.1) l'on utlise un ensemble gaine de moteur et/ou une isolation électrique en matériau résistant à la corrosion non-magéntique et de préférence particulière en matériau non ferromagnétique résistant à la corrosion.

13. Centrale génératrice d'énergie selon l'une quelconque des revendications précédentes, **caractérisée en ce que** le rotor de générateur (6.1) comprend des aimants permanents et/ou un agencement prévu pour excitation externe, à laquelle la puissance d'excitation est acheminée sans contact de la partie bloquée en rotation de la centrale génératrice d'énergie.

14. Centrale génératrice d'énergie selon l'une quelconque des revendications précédentes, **caractérisée en ce que** l'élément d'appui (3) présente un passage dans la direction axiale le long de l'axe longitudinal (8), intégrant un mécanisme de réglage mécanique de tangage (pitch) des pales de turbine (2.1, 2.2, 2.3) de la turbine à eau (1).
